(19) Europäisches Patentamt / European Patent Office / Office européen des brevets

(11) **EP 4 693 494 A1**

(12) **EUROPEAN PATENT APPLICATION**
published in accordance with Art. 153(4) EPC

(43) Date of publication:
**11.02.2026 Bulletin 2026/07**

(21) Application number: **24863080.8**

(22) Date of filing: **21.08.2024**

(51) International Patent Classification (IPC):
*H01M 4/525* (2010.01)   *H01M 4/505* (2010.01)
*H01M 4/131* (2010.01)   *H01M 10/0525* (2010.01)
*C01G 53/00* (2025.01)   *H01M 4/36* (2006.01)
*H01M 10/052* (2010.01)   *H01M 4/02* (2006.01)

(52) Cooperative Patent Classification (CPC):
C01G 53/00; H01M 4/02; H01M 4/131; H01M 4/36;
H01M 4/505; H01M 4/525; H01M 10/052;
H01M 10/0525; Y02E 60/10

(86) International application number:
**PCT/KR2024/012441**

(87) International publication number:
**WO 2025/053499 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 04.09.2023  KR 20230117305
          16.01.2024  KR 20240006915

(71) Applicant: **LG Energy Solution, Ltd.**
**Seoul 07335 (KR)**

(72) Inventors:
- **CHAE, Seul Ki**
  **Daejeon 34122 (KR)**
- **PARK, Byung Chun**
  **Daejeon 34122 (KR)**
- **KIM, Ji Hye**
  **Daejeon 34122 (KR)**
- **LEE, Si Yeol**
  **Daejeon 34122 (KR)**
- **LEE, Sang Yeop**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL AND METHOD FOR PREPARING SAME**

(57) The present invention relates to a positive electrode active material comprising: a lithium nickel-cobalt-manganese-based composite oxide having a nickel content 90 mol% or more among metals excluding lithium; and a metal element M1 doped in the lithium nickel-cobalt-manganese-based composite oxide, wherein the metal element M1 comprises two or more selected from the group consisting of Al, Zr and Ti, and certainly comprises Al, a weight of Al is 8,000 ppm or more based on a total weight of the positive electrode active material, and a total weight of the metal element M1 is 9,000 ppm to 12,000 ppm based on the total weight of the positive electrode active material, a method for preparing the same, and a positive electrode and a lithium secondary battery comprising the positive electrode active material.

FIG. 1

EP 4 693 494 A1

**Description**

**TECHNICAL FIELD**

This application claims priority from Korean Patent Application Nos. 10-2023-0117305, filed on September 4, 2023, and 10-2024-0006915, filed on January 16, 2024, in the Korean Intellectual Property Office, the contents of which are incorporated herein by reference.

The present invention relates to a positive electrode active material, a method for preparing the same, a positive electrode and a lithium secondary battery.

**BACKGROUND ART**

Recently, with the rapid spread of electronic devices that use batteries, such as mobile phones, laptop computers, and electric vehicles, the demand for small, lightweight, and relatively high-capacity secondary batteries is rapidly increasing. In particular, lithium secondary batteries are gaining attention as a power source for portable devices because they are lightweight and have high energy density. Accordingly, research and development efforts are actively being conducted to improve the performance of lithium secondary batteries.

Lithium secondary batteries produce electrical energy by oxidation and reduction reactions when lithium ions are intercalated/deintercalated from positive and negative electrodes, while charging an organic electrolyte or polymer electrolyte between the positive and negative electrodes, which are formed of active materials capable of intercalating and deintercalating lithium ions.

Lithium cobalt oxide ($LiCoO_2$), lithium nickel oxide ($LiNiO_2$), lithium manganese oxide ($LiMnO_2$, $LiMn_2O_4$ or the like), lithium iron phosphate compound ($LiFePO_4$) or the like have been used as the positive electrode active materials of lithium secondary batteries. In addition, as a method to improve the low thermal stability while maintaining the excellent reversible capacity of $LiNiO_2$, lithium composite metal oxides (hereinafter simply referred to as "NCM-based lithium composite transition metal oxides") in which some of nickel (Ni) is replaced with cobalt (Co) and manganese (Mn) have been developed. However, the conventionally developed NCM-based lithium composite transition metal oxides had insufficient capacity characteristics, to limit their application.

To improve the problems, research has been conducted recently to increase the content of Ni in NCM-based lithium composite transition metal oxides. However, high-Ni positive electrode active materials with a high nickel content generate a large amount of gas during charge and discharge processes due to the high reactivity of nickel, and there is a problem that the lattice structure is highly instable due to cation mixing and oxygen desorption, and the content of lithium impurities remaining on the surface increases.

Therefore, it is necessary to develop positive electrode materials that have excellent capacity and structural stability at the same time by having high nickel content.

**DISCLOSURE OF THE INVENTION**

**TECHNICAL PROBLEM**

The present invention intends to provide a positive electrode active material with improved structural stability and a method for preparing the same, and a positive electrode and a lithium secondary battery with improved capacity, resistance, and life characteristics by including the positive electrode active material.

**TECHNICAL SOLUTION**

The present invention provides a positive electrode active material comprising:

a lithium nickel-cobalt-manganese-based composite oxide having a nickel content of 90 mol% or more among metals excluding lithium; and
a metal element M1 doped in the lithium nickel-cobalt-manganese-based composite oxide,
wherein the metal element M1 comprises two or more selected from the group consisting of Al, Zr and Ti, and certainly comprises Al,
a weight of Al is 8,000 ppm or more based on a total weight of the positive electrode active material, and
a total weight of the metal element M1 is 9,000 ppm to 12,000 ppm based on the total weight of the positive electrode active material.

In addition, the present invention provides a method for preparing the positive electrode active material, comprising a step of mixing a nickel-cobalt-manganese composite precursor having a nickel content of 90 mol% or more among metals excluding lithium, a lithium raw material and a doping raw material containing a metal element M1, and calcining at 650°C to 850°C.

In addition, the present invention provides a positive electrode comprising: a positive electrode current collector; and a positive electrode active material layer provided on at least one surface of the positive electrode current collector, wherein the positive electrode active material layer comprises the positive electrode active material.

In addition, the present invention provides a lithium secondary battery comprising: the positive electrode; a negative electrode comprising a negative electrode active material; a separator disposed between the positive electrode and the negative electrode; and an electrolyte.

## ADVANTAGEOUS EFFECTS

The positive electrode active material according to the present invention has excellent capacity due to a high nickel content, and so may reduce the amount of cobalt used, and accordingly, it is advantageous in terms of material supply and price.

In addition, since Zr and/or Ti are included as doping elements together with Al, the effects of improving a crystal structure and particle strength may be achieved according to the inclusion of each of the doping elements.

In particular, since the doping elements are included in a total content of 9,000-12,000 ppm, and among them, Al is included in a content of 8,000 ppm or more, the limitations of the high-nickel, low-cobalt positive electrode active material, specifically, the disadvantages of large volume change during charge and discharge, which are disadvantages in terms of resistance and lifespan may be effectively resolved.

Also, since the positive electrode active material contributes to lowering the charge and discharge efficiency during initial charge and discharge without deteriorating other performances, the capacity loss due to the irreversible reaction in combination with a negative electrode including a silicon-based negative electrode material may be compensated.

Therefore, a lithium secondary battery including the positive electrode active material has the advantages of excellent capacity, resistance, and life characteristics.

## BRIED DESCRIPTION OF DRAWINGS

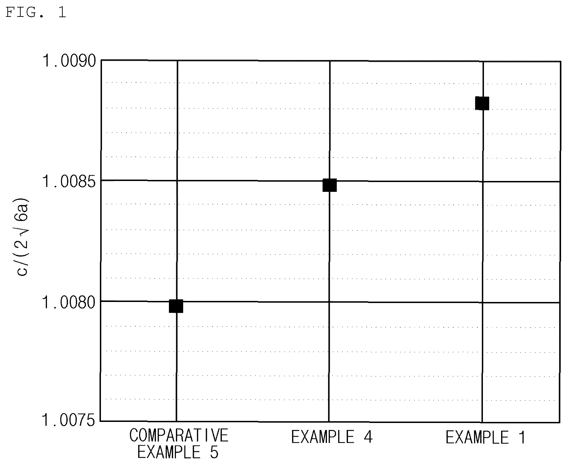

FIG. 1 shows the results of obtaining $c/2\sqrt{6a}$ by an XRD analysis of the positive electrode active materials prepared in Example 1, Example 4, and Comparative Example 5 in the present invention.

## BEST MODE FOR CARRYING OUT THE INVENTION

Hereinafter, the present invention will be explained in particular.

In the present invention, the content of a doping element may be measured by inductively coupled plasma optical emission spectroscopy (ICP-OES). Specifically, it means that 0.03 g of a positive electrode active material to be analyzed is dispersed and dissolved in 1 mL of hydrochloric acid, small amounts of hydrogen peroxide and hydrofluoric acid are added, and then the resultant is diluted with 50 mL of ultrapure water and analyzed using an Avio series (PerkinElmer, Inc.) device.

In the present invention, "D50" means a particle size corresponding to 50% of a volume cumulative in volume cumulative particle size distribution of the target powder for measurement, and may be measured using a laser diffraction method. For example, the positive electrode active material powder is dispersed in a dispersion medium, and is introduced into a commercially available laser diffraction particle size measurement device (e.g., Microtrac S-3500), and ultrasonic waves of about 28 kHz are irradiated at an output of 60 W, and then a volume cumulative particle size distribution graph is obtained, and then, the particle size at the point where the volume cumulative amount is 50% is obtained from the graph obtained.

In the present invention, a "crystallite" means a particle unit having substantially the same crystal orientation, which may be confirmed through electron backscatter diffraction (EBSD) analysis. Specifically, the crystallite is the minimum particle unit displayed in the same color in an IPF map obtained by the EBSD analysis on the crosssection of a positive electrode active material cut through ion milling.

Meanwhile, in the present invention, an "average crystallite size," an "a-axis direction length of the crystallite," and a "c-axis direction length of the crystallite" may be quantitatively analyzed using X-ray diffraction analysis (XRD) by Cu Kα X-rays. Specifically, the crystallite size may be quantitatively analyzed by putting the particle to be measured in a holder, irradiating the particle with X-rays, and analyzing the diffraction lattice that appears. Sampling was prepared by putting the powder sample of the particle to be measured into a groove in the center of a general powder holder, smoothing the surface using a slide glass, and making the sample height the same as the edge of the holder. Then, X-ray diffraction analysis was performed using a Bruker D8 Endeavor (light source: Cu K$\alpha$, $\lambda$=1.54 Å) equipped with a LynxEye XE-T position sensitive detector under the conditions of a step size of 0.02 degrees, a total scan time of approximately 20 minutes, for an FDS of 0.5°, and 2$\theta$=15°-90° range. For the measured data, Rietveld refinement was performed considering the charge (+3 for metal ions at a transition metal site, +2 for Ni ions at a Li site) and cation mixing at each site. When analyzing the crystallite size, instrumental brodadening was considered using the Fundamental Parameter Approach (FPA) implemented in a Bruker TOPAS program, and the entire peaks of the measurement range were used for fitting. The peak shape was fitted using only the Lorenzian contribution as the First Principle (FP) among the peak types available in TOPAS, and strain was not considered in this case.

However, in the c-axis length change ratio according to Equation 1 below, the c-axis length is measured by manufacturing a separate battery for performing in-situ Operando XRD analysis, and specifically, a Mo target X-ray is used as a light source while charging, and XRD analysis is performed in a 2-$\theta$ scan method in a transmission mode. The 1st slit is 1/4°, the Soller slit (both 1st and 2nd) is 0.02 rad, and the 2nd mask is 1.68 mm, and the 2-$\theta$ 7° to 30° range is measured every 0.014° for about 6 minutes per scan.

Hereinafter, each component of the present invention will be explained in particular.

<Positive Electrode Active Material>

The present invention relates to a positive electrode active material, specifically, to a positive electrode active material for a lithium secondary battery.

The positive electrode active material of the present invention comprises a lithium nickel-cobalt-manganese-based composite oxide having a nickel content of 90 mol% or more among metals excluding lithium; and a metal element M1 doped in the lithium nickel-cobalt-manganese-based composite oxide, wherein the metal element M1 is two or more selected from the group consisting of Al, Zr, and Ti, and certainly comprises Al, a weight of the Al is 8,000 ppm or more based on a total weight of the positive electrode active material, and a total weight of the metal element M1 is 9,000 ppm to 12,000 ppm based on the total weight of the positive electrode active material.

As described above, if the nickel content in NCM oxide is increased, high capacity may be secured, but there is a problem of deterioration in structural stability. Specifically, high-nickel positive electrode active materials have the disadvantage of undergoing a lot of changes in lattice constant, that is, changes in volume within a unit lattice, and the volume changes cause cracks to occur within active material particles. The cracks thus occurred may cause voids to occur within the active material, leading to a decrease in battery performance.

In addition, since the nickel content is high, the phenomenon of cation mixing of lithium ions and nickel ions occurs frequently, which hinders the movement of lithium ions during battery operation, causing an increase in battery resistance and a decrease in lifespan.

Accordingly, the inventors of the present invention solved the above problem by controlling the type and content of doping elements in an ultra-high nickel positive electrode active material having a nickel content of 90 mol% or more.

Specifically, in the lithium nickel-cobalt-manganese-based composite oxide having a Ni content of 90 mol% or more, Al increases the length of the c-axis relative to the a-axis in the crystal structure of primary particles, thereby enhancing the completeness of the layered structure and alleviating discontinuity in a phase change process from H2 to H3 during charging. Therefore, the rapid volume change of the particles and the occurrence of cracks resulting therefrom may be reduced, thereby improving the lifespan of the battery.

In the case of Zr, the mobility of lithium ions may be improved within the crystal during charge and discharge by reducing cation mixing between Li ions and Ni ions, which ultimately contributes to improving the lifespan of the battery. In the case of Ti, the effect of preventing the crystal size from growing beyond a certain level may be achieved, and accordingly, the volume change may be mitigated during charge and discharge, thereby contributing to reducing resistance and improving the lifespan.

In addition, Ti has a stronger bonding force with oxygen than Ni, Co, and Mn in the lithium nickel-cobalt-manganese-based composite oxide, to increase particle strength during doping. As a result, particle breakage is improved, which may lead to improved battery lifespan.

In the case of high-nickel, low-cobalt positive electrode materials, it is difficult to have a high-quality crystal structure, and the volume change during charge and discharge is extreme, so battery performance is greatly deteriorated. Therefore, in order to alleviate this, it is necessary to be doped with 10,000 ppm or more of doping elements. In particular, by doping Al, and Zr and/or Ti together, the various shortcomings of the positive electrode material may be compensated.

In addition, since the positive electrode active material according to the present invention may reduce initial charge and discharge efficiency through the doping, there is an advantage in that it may compensate for the irreversible capacity of a negative electrode in combination with a negative electrode including a negative electrode active material such as SiO or Si, which has a high lithium ion loss ratio due to initial irreversibility.

On the other hand, in the case of a positive electrode active material having a Ni content of less than 90 mol%, doping in this manner may be disadvantageous in terms of achieving energy density because the capacity may be reduced due to excessive doping, but in the case of the present invention having a Ni content of 90 mol% or more, the effect of capacity reduction due to doping on the energy density loss of the entire active material is relatively small.

In an embodiment of the present invention, the total weight of the metal element M1 may be 9,500 ppm or more, 10,000 ppm or more, or 10,500 ppm or more, and 11,500 ppm or less or 11,000 ppm or less based on the total weight of the positive electrode active material. If M1 is included in an amount of 9,000 ppm or more, the above-described effect may be achieved, but if the amount exceeds 12,000 ppm, it is undesirable in that undoped residues are produced on the surface of the active material, which causes an increase in surface resistance and a decrease in expression capacity.

In an embodiment of the present invention, the metal element M1 includes Al, and the weight of Al may be 8,000 ppm or more, 8,500 ppm or more, or 8,700 ppm or more, and 10,000 ppm or less, 9,500 ppm or less, or 9,300 ppm or less based on the total weight of the positive electrode active material. If the content of Al is 8,000 ppm or more, it is preferable in that the effect of Al described above may be achieved. However, considering that no undoped residue is required to remain, 10,000 ppm or less is preferable.

In an embodiment of the present invention, the metal element M1 includes Zr, and the weight of Zr may be 1,000 ppm or more, 1,100 ppm or more, or 1,200 ppm or more, and may be 4,000 ppm or less, 3,000 ppm or less, 2,000 ppm or less, or 1,500 ppm or less based on the total weight of the positive electrode active material. If the content of Zr is 1,000 ppm or more, it is preferable in that the above-described effect of Zr may be achieved. However, considering that no undoped residue is required to remain, 4,000 ppm or less is preferable.

In an embodiment of the present invention, the metal element M1 includes Ti, and the content of Ti based on the total weight of the positive electrode active material may be 300 ppm or more, 400 ppm or more, or 500 ppm or more, and may be 4,000 ppm or less, 3,000 ppm or less, 2,000 ppm or less, or 1,000 ppm or less. If the content of Ti is 300 ppm or more, it is preferable in that the effect of Ti described above may be achieved. However, considering that no undoped residue is required to remain, and excessive addition of Ti may rapidly reduce the crystal size and increase the resistance, 4,000 ppm or less is preferable.

In an embodiment of the present invention, the metal element M1 may include Al and Zr, and in this case, a crystal state of a layered structure with a high level of completion, in which the ratio of the c-axis length to the a-axis length is large and Li/Ni cation mixing is reduced, may be obtained. If such a crystal structure with a high level of completion is achieved, it is preferable in that volume change may be alleviated during charge and discharge. In this case, the weight ratio of Al and Zr may be 1.5:1 to 9:1, preferably 5:1 to 9:1, and more preferably 7:1 to 9:1.

Most preferably, the metal element M1 may include all of Al, Zr and Ti, in which case it is preferable in that the life performance may be improved by reducing a crystal size and increasing particle strength. In this case, the weight ratio of Al:Zr:Ti may be 10-20:1-5:1, preferably 14-16:1-3:1.

In an embodiment of the present invention, the lithium nickel-cobalt-manganese-based composite oxide may have a nickel content of 92 mol% or more, preferably 93 mol% or more, and more preferably 95 mol% to 99 mol% among metals excluding lithium. In this case, it is preferable in that high capacity may be achieved.

In addition, the lithium nickel-cobalt-manganese-based composite oxide may have a content of cobalt of 0.1 mol% to 1.0 mol%, preferably 0.2 mol% to 0.9 mol%, and more preferably 0.4 mol% to 0.8 mol% among metals excluding lithium. That is, in the present invention, the lifespan, resistance, and output characteristics are improved through the control of the doping conditions while minimizing the content of expensive cobalt.

Specifically, the lithium nickel-cobalt-manganese-based composite oxide may have a composition represented by Formula 1 below.

$$[\text{Formula 1}] \qquad Li_{1+x}(Ni_aCo_bMn_cM1_dM2_e)O_2$$

In Formula 1 above,

M1 is two or more selected from the group consisting of Al, Zr, and Ti,
M2 is one or more selected from the group consisting of W, Cu, Fe, V, Cr, Zn, Al, In, Ta, Y, La, Sr, Ga, Sc, Gd, Sm, Ca, Ce, Nb, Mg, B, and Mo,
1+x, a, b, c, d, and e are atomic fractions of independent elements, respectively, and
$-0.2 \le x \le 0.2$, $0.90 \le a < 1$, $0 < b < 0.01$, $0 < c < 0.10$, $0 < d \le 0.05$, $0 \le e \le 0.05$, and $a+b+c+d+e=1$ are satisfied.

The 1+x represents the lithium molar ratio in the lithium nickel-cobalt-manganese-based composite oxide, and $-0.1 \le x \le 0.2$, or $0 \le x \le 0.2$ may be satisfied. If the lithium molar ratio satisfies the above range, the crystal structure may be stably formed.

The a represents the molar ratio of nickel among the total metals excluding lithium in the lithium nickel-cobalt-manganese-based composite oxide, and $0.92 \le a < 1$, $0.93 \le a < 1$, or $0.95 \le a < 1$ may be satisfied. If the molar ratio of nickel satisfies the above range, high energy density may be exhibited, and high capacity may be achieved.

The b represents the molar ratio of cobalt among the total metals excluding lithium in the lithium nickel-cobalt-manganese-based composite oxide, and $0<b\leq0.009$, $0.002\leq b\leq0.008$, or $0.004\leq b\leq0.008$ may be satisfied. If the molar ratio of cobalt satisfies the above range, excellent resistance characteristics and output characteristics may be achieved.

The c represents the molar ratio of manganese among the total metals excluding lithium in the lithium nickel-based oxide, and $0<c\leq0.080$, $0<c\leq0.060$, or $0.010\leq c\leq0.050$ may be satisfied. If the molar ratio of manganese satisfies the above range, the structural stability of the positive electrode active material may be excellent.

The d represents the molar ratio of the M1 element among the total metals excluding lithium in the lithium nickel-based oxide, and the above d may satisfy $0<d\leq0.045$, $0.010\leq d\leq0.045$, or $0.020\leq d\leq0.040$.

The e represents the molar ratio of the M2 element among the total metals excluding lithium in the lithium nickel-based oxide, and may be appropriately adjusted as needed.

In an embodiment of the present invention, the average crystallite size of the positive electrode active material may be 80 nm to 160 nm, preferably 85 nm to 150 nm, and more preferably 90 nm to 150 nm. If the average crystallite size is within the range, there is an advantage in that excellent long-life performance may be secured.

In an embodiment of the present invention, a value of $c/2\sqrt{6}a$, where a and c represent the a-axis direction and the c-axis direction lengths of the crystallite of the positive electrode active material, respectively, may be 1.0075 or more, preferably 1.0080 or more, more preferably 1.0085 or more, and may be 1.0200 or less. This means that the layered structure of the crystal is well formed by the M1 and the interlayer distance is sufficiently secured, and in this case, there is an advantage in that resistance reduction and life improvement are possible.

Meanwhile, the c-axis length change ratio according to Equation 1 below of the positive electrode active material may be 7.0% or less, preferably 6.5% or less, and more preferably 6.0% or less.

$$\text{Change ratio of c-axis length (\%)} = \{ (C_{max}-C_{min})/C_{min} \} \times 100 \qquad \text{[Equation 1]}$$

In Equation 1 above, $C_{max}$ is the maximum value of the c-axis length,

$C_{min}$ is the minimum value of the c-axis length, and
the c-axis length is obtained by performing an in-situ Operando XRD analysis while charging a battery including a positive electrode including the positive electrode active material. In this case, the charging may be performed in a manner of CC charging at 0.1 C to 4.35 V and then, maintaining a CV state until a current density becomes 0.05 C.

Specifically, the battery may be manufactured in a pouch shape by including the positive electrode material for in-situ XRD analysis, and more specifically, the battery may be a pouch-shaped full cell manufactured by interposing a porous polyethylene separator between a positive electrode including the positive electrode active material and a negative electrode including graphite as a negative electrode active material to form an electrode assembly, positioning the electrode assembly inside a battery case, and then injecting an electrolyte into the case. The electrolyte may be prepared by dissolving $LiPF_6$ of 1 M concentration in a mixed organic solvent of ethylene carbonate/dimethyl carbonate/diethyl carbonate in a volume ratio of 3:4:3.

### <Method for Preparing Positive Electrode Active Material>

Meanwhile, the method for preparing the positive electrode active material includes a step of mixing a nickel-cobalt-manganese composite precursor having a nickel content of 90 mol% or more among metals excluding lithium, a lithium raw material, and a doping raw material containing a metal element M1, and calcining at 650°C to 850°C.

Specifically, the calcination may be performed at 700°C to 800°C for 15 hours to 24 hours.

Meanwhile, the method for preparing the positive electrode active material may further include a step of dissolving a nickel precursor, a cobalt precursor, and a manganese precursor in a solvent in a reactor to prepare a transition metal-containing solution; and a step of supplying the transition metal-containing solution, an ammonium cation complex forming agent, and a basic compound while performing a co-precipitation reaction to form a nickel-cobalt-manganese composite precursor having a nickel content of 90 mol% or more. An oxidizing agent or oxygen gas may be further added during the co-precipitation reaction as needed.

Meanwhile, the transition metal precursor may be an acetate, carbonate, nitrate, sulfate, halide, sulfide, or the like of each transition metal.

Specifically, the nickel precursor may be one or more selected from the group consisting of $NiO$, $NiCO_3$ $\cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, and nickel sulfide, and the cobalt precursor may be one or more selected from the group consisting of $Co(OH)_2$, $Co_3O_4$, $CoOOH$, $Co(OCOCH_3)_2 \cdot 4H_2O$, $Co(NO_3)_2 \cdot 6H_2O$ and $CoSO_4 \cdot 7H_2O$. In addition, the manganese precursor may be one or more selected from the group consisting of $Mn_2O_3$, $MnO_2$, $Mn_3O_4$, $MnCO_3$, $Mn(NO_3)_2$, $MnSO_4 \cdot H_2O$, manganese acetate, manganese halides, and manganese sulfide.

Meanwhile, the lithium raw material may be an oxide, hydroxide, oxyhydroxide, halide, nitrate, carbonate, acetate, oxalate, citrate, or sulfate containing lithium. More specifically, the lithium raw material may be one or more selected from the group consisting of $Li_2CO_3$, $LiNO_3$, $LiNO_2$, $LiOH$, $LiOH \cdot H_2O$, $LiH$, $LiF$, $LiCl$, $LiBr$, $LiI$, $Li_2O$, $Li_2SO_4$, $CH_3COOLi$, and $Li_3C_6H_6O_7$.

In this case, the injection amount of each transition metal precursor may be determined in consideration of the molar ratio of the transition metals in the positive electrode active material to be ultimately produced.

Meanwhile, the ammonium cation complex forming agent may include at least one or more compounds selected from the group consisting of $NH_4OH$, $(NH_4)_2SO_4$, $NH_4NO_3$, $NH_4Cl$, $CH_3COONH_4$, and $(NH_4)_2CO_3$, and may be introduced into the reactor in the form of a solution in which the compound is dissolved in a solvent. In this case, as the solvent, water or a mixture of water and an organic solvent (specifically, alcohol or the like) that may be uniformly mixed with water may be used.

The basic compound may be at least one or more compounds selected from the group consisting of NaOH, KOH, and $Ca(OH)_2$, and may be introduced into the reactor in the form of a solution in which the compound is dissolved in a solvent. In this case, as the solvent, water or a mixture of water and an organic solvent (specifically, alcohol or the like) that may be uniformly mixed with water may be used.

As described above, if the transition metal-containing solution, ammonium cation complex forming agent, and basic compound are added to the reactor and stirred, the transition metals in the transition metal-containing solution are coprecipitated, thereby producing precursor particles in the form of a transition metal hydroxide.

In this case, the transition metal-containing solution, ammonium cation complex forming agent, and basic compound are added in amounts such that the pH of the reaction solution is within a desired range.

If the precursor particles are formed in the above manner, the precursor is obtained by separating from the reaction solution. For example, the precursor may be obtained by filtering the reaction solution to separate the precursor from the reaction solution, and then washing and drying the separated precursor. In this case, processes such as pulverization and/or classification may be performed as needed.

The nickel-cobalt-manganese composite precursor thus prepared is mixed with a lithium raw material and a doping raw material containing a metal element M1, and then calcined to prepare a lithium nickel cobalt-manganese-based composite oxide.

As the lithium raw material, lithium-containing sulfate, nitrate, acetate, carbonate, oxalate, citrate, halide, hydroxide or oxyhydroxide may be used, and for example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_3O_7$ or a mixture thereof may be used.

Meanwhile, the lithium raw material and the nickel-cobalt-manganese composite precursor may be mixed so that the molar ratio of Li: the total metal in the precursor is 1:1 to 1.2:1, preferably 1:1 to 1.1:1. If the mixing ratio of the lithium raw material and the metals in the precursor satisfies the above range, the layered crystal structure of the lithium nickel-cobalt-manganese-based composite oxide is well developed, so that a positive electrode active material with excellent capacity characteristics and structural stability may be prepared.

In addition, the doping raw material containing the metal element M1 may be an oxide, hydroxide, oxyhydroxide, halide, nitrate, carbonate, acetate, oxalate, citrate or sulfate, containing the metal element M1.

If additional doping of the metal element M2 is performed, the type and amount added of the metal element M2 may be adjusted in consideration of the type and content of the metal element M2 included in the positive electrode active material described above.

**<Positive Electrode>**

The positive electrode according to the present invention comprises: a positive electrode current collector; and a positive electrode active material layer provided on at least one surface of the positive electrode current collector, wherein the positive electrode active material layer comprises the positive electrode active material described above.

The positive electrode current collector may include a highly conductive metal, and is not particularly limited as long as the positive electrode active material layer is easily adhered thereto, but is not reactive in the voltage range of the battery. The positive electrode current collector may use, for example, stainless steel, aluminum, nickel, titanium, fired carbon, or aluminum or stainless steel, surface-treated with carbon, nickel, titanium, silver or the like. In addition, the positive electrode current collector may typically have a thickness of 3 μm to 500 μm, and may form fine unevenness on the surface of the current collector to increase the adhesive strength of the positive electrode active material. For example, the positive electrode current collector may be used in various forms such as a film, a sheet, a foil, a net, a porous body, a foam, and a non-woven fabric.

The positive electrode may be manufactured according to the conventional positive electrode manufacturing method, except that the positive electrode active material is used. Specifically, the positive electrode may be manufactured by applying a positive electrode slurry containing the positive electrode active material onto a positive electrode current collector, followed by drying and rolling, or by casting the positive electrode slurry onto a separate support, and then laminating a film obtained by peeling from the support, onto a positive electrode current collector.

In an embodiment of the present invention, the positive electrode includes a positive electrode active material layer formed by coating a positive electrode slurry containing the positive electrode active material on at least one surface of a positive electrode current collector.

Meanwhile, the positive electrode slurry may include the positive electrode active material, a binder, a conductive material, and a solvent.

Specifically, the binder may be one or more selected from the group consisting of polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluororubber, and various copolymers thereof, and preferably polyvinylidene fluoride.

The binder may be included in an amount of 0.5 wt% to 3 wt%, preferably 1 wt% to 3 wt%, and more preferably 1.5 wt% to 2.5 wt% based on the total weight of the solid content in the positive electrode slurry. If the content of the binder is within the above range, sufficient adhesion strength to the current collector and bonding between particles may be secured to improve the durability of the positive electrode while maintaining a low initial resistance.

The conductive material may be one or more selected from the group consisting of graphite such as natural graphite or artificial graphite; carbon black such as acetylene black, Ketjen black, channel black, furnace black, lamp black, and thermal black; carbon-based materials such as carbon fibers and carbon nanotubes; metal powders or metal fibers of copper, nickel, aluminum, silver or the like; conductive whiskers of zinc oxide, potassium titanate or the like; conductive metal oxides such as titanium oxide; and conductive polymers such as polyphenylene derivatives, and preferably carbon nanotubes or carbon black, and most preferably carbon nanotubes.

The conductive material may be included in an amount of 0.1 wt% to 2.5 wt%, preferably 0.5 wt% to 2 wt%, and more preferably 1 wt% to 2 wt% based on the total weight of the solid content in the positive electrode slurry. If the content of the conductive material is within the above range, it is preferable in that dead volume may be reduced while maintaining conductivity between active materials.

In addition, the positive electrode slurry may optionally further include a dispersant, and the dispersant may be hydrogenated nitrile butadiene rubber (HNBR).

Meanwhile, the solvent of the positive electrode slurry may be a solvent generally used in the relevant technical field, and for example, N-methylpyrrolidone (NMP), dimethyl sulfoxide (DMSO), isopropyl alcohol, dimethyl formamide (DMF), acetone, water, or a mixture of two or more thereof may be used. The solvent may be used by adjusting the above-described positive electrode slurry to have an appropriate viscosity. For example, the solvent may be included so that the concentration of the solid content in the positive electrode slurry may be 60 wt% or more, preferably 60 wt% to 90 wt%, and more preferably 60 wt% to 80 wt%.

### <Lithium Secondary Battery>

Next, a lithium secondary battery according to the present invention will be explained.

The lithium secondary battery specifically includes a positive electrode, a negative electrode including a negative electrode active material, a separator interposed between the positive electrode and the negative electrode and an electrolyte. Since the positive electrode is the same as described above, the detailed description thereof will be omitted, and only the remaining components will be specifically described below.

In addition, the lithium secondary battery may optionally further include a battery container that accommodates the electrode assembly of the positive electrode, the negative electrode, and the separator, and a sealing member that seals the battery container.

In the lithium secondary battery, the negative electrode includes a negative electrode current collector and a negative electrode active material layer positioned on the negative electrode current collector.

The negative electrode current collector is not particularly limited as long as it has high conductivity without causing chemical changes in the battery, and for example, copper, stainless steel, aluminum, nickel, titanium, fired carbon, copper or stainless steel, surface-treated with carbon, nickel, titanium, silver or the like, an aluminumcadmium alloy, or the like may be used. In addition, the negative electrode current collector may typically have a thickness of 3 $\mu$m to 500 $\mu$m, and, like the positive electrode current collector, may form fine unevenness on the surface of the current collector to reinforce the bonding strength of the negative electrode active material. For example, the negative electrode current collector may be used in various forms such as a film, a sheet, a foil, a net, a porous body, a foam, a nonwoven fabric or the like.

The negative electrode active material layer optionally includes a binder and a conductive material together with the negative electrode active material.

A compound capable of reversible intercalation and deintercalation of lithium may be used as the negative electrode active material. Specific examples include: carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and dedoping lithium, such as $SiO_\beta$ ($0<\beta<2$), $SnO_2$, vanadium oxide, lithium vanadium oxide; or composites including the above metallic compounds and carbonaceous materials, such as Si-C composites or Sn-C composites, and any one or a mixture of two or more thereof may be used.

In an embodiment of the present invention, the negative electrode active material may be graphite, the Si-containing material, or a mixture thereof, specifically, graphite, and more specifically, a mixture of artificial graphite and natural graphite. In addition, a metal lithium thin film may be used as the negative electrode active material. The negative electrode active material may be included in an amount of 80 wt% to 99 wt% based on the total weight of the negative electrode active material layer.

The binder is a component that assists in the bonding among the conductive material, the active material, and the current collector, and is typically added in an amount of 0.1 wt% to 10 wt% based on the total weight of the negative electrode active material layer. Examples of such binders include polyvinylidene fluoride (PVDF), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, an ethylene-propylene-diene polymer (EPDM), a sulfonated-EPDM, styrene-butadiene rubber, nitrile-butadiene rubber, fluororubber, and various copolymers thereof.

The conductive material is a component that further improves the conductivity of the negative electrode active material, and may be added in an amount of 10 wt% or less, preferably 5 wt% or less based on the total weight of the negative electrode active material layer. The conductive material is not particularly limited as long as it does not cause a chemical change in the battery and has conductivity, and for example, graphite such as natural graphite or artificial graphite; carbon black such as acetylene black, Ketjen black, channel black, furnace black, lamp black, or thermal black; conductive fibers such as carbon fibers or metal fibers; fluorinated carbon; metal powders of aluminum or nickel powder; conductive whiskers of zinc oxide or potassium titanate; conductive metal oxides such as titanium oxide; conductive materials such as polyphenylene derivatives, or the like may be used.

The negative electrode active material layer may be prepared by applying a negative electrode mixture prepared by dissolving or dispersing a negative electrode active material, and optionally a binder and a conductive material in a solvent on a negative electrode current collector, and drying, or by casting the negative electrode mixture on a separate support and then laminating a film obtained by peeling off from the support on a negative electrode current collector.

Meanwhile, in the lithium secondary battery, the separator separates the negative electrode and the positive electrode and provides a passage for lithium ions to move. Any separator that is commonly used as a separator in a lithium secondary battery may be used without special limitations, and in particular, one that has low resistance to ion movement of the electrolyte and excellent electrolyte moisture retention capacity is preferable. Specifically, a porous polymer film, for example, a porous polymer film formed of a polyolefinbased polymer such as an ethylene homopolymer, a propylene homopolymer, an ethylene/butene copolymer, an ethylene/hexene copolymer, and an ethylene/methacrylate copolymer, or a laminated structure of two or more layers thereof, may be used. In addition, the conventional porous nonwoven fabric, for example, a nonwoven fabric formed of high-melting-point glass fibers, polyethylene terephthalate fibers, or the like may be used. In addition, a coated separator containing a ceramic component or a polymer material to secure heat resistance or mechanical strength may be used, and may be selectively used in a single layer or multilayer structure.

In addition, the electrolyte used in the present invention may include, but is not limited thereto, an organic liquid electrolyte, an inorganic liquid electrolyte, a solid polymer electrolyte, a gel-type polymer electrolyte, a solid inorganic electrolyte, a molten inorganic electrolyte, or the like that may be used in the manufacture of a lithium secondary battery.

Specifically, the electrolyte may include an organic solvent and a lithium salt.

The organic solvent may be used without any particular limitation as long as it may act as a medium through which ions involved in the electrochemical reaction of a battery may move. Specifically, the organic solvent may include esterbased solvents such as methyl acetate, ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (R is a linear, branched, or cyclic hydrocarbon group having 2 to 20 carbon atoms and may include a double-bonded aromatic ring or an ether bond); amides such as dimethylformamide; dioxolanes such as 1,3-dioxolane; or sulfolanes, may be used. Among them, a carbonate-based solvent is preferable, and a mixture of a cyclic carbonate (e.g., ethylene carbonate, propylene carbonate or the like) having high ionic conductivity and high dielectric constant that may improve the charge and discharge performance of the battery and a linear carbonate compound having low viscosity (e.g., ethyl methyl carbonate, dimethyl carbonate, diethyl carbonate or the like) is more preferable.

The lithium salt may be used without special restrictions as long as it is a compound that may provide lithium ions used in a lithium secondary battery. Specifically, the anion of the lithium salt may be $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$,

$CF_3CO_2^-$, $CH_3CO_2^-$, $SCN^-$ or $(CF_3CF_2SO_2)_2N^-$. More specifically, the lithium salt may be one or more selected from the group consisting of $LiPF_6$, $LiClO_4$, $LiAsF_6$, $LiBF_4$, $LiSbF_6$, $LiAlO_2$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$ and $LiB(C_2O_4)_2$. It is preferable to use the concentration of the lithium salt within the range of 0.1 M to 4.0 M. If the concentration of the lithium salt is within the above range, the electrolyte may have appropriate conductivity and viscosity, and may exhibit excellent electrolyte performance, and lithium ions may move effectively.

In addition to the electrolyte components, the electrolyte may further include one or more additives such as haloalkylene carbonate compounds such as difluoroethylene carbonate, pyridine, triethyl phosphite, triethanolamine, a cyclic ether, ethylene diamine, n-glyme, hexamethylphosphate triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxy ethanol, or aluminum trichloride, for the purpose of improving the life characteristics of the battery, suppressing battery capacity decrease, and improving the discharge capacity of the battery. In this case, the additives may be included in an amount of 0.1 wt% to 5 wt% based on the total weight of the electrolyte.

As described above, the lithium secondary battery including the positive electrode active material according to the present invention stably exhibits excellent resistance characteristics and life characteristics, and is useful in portable devices such as mobile phones, laptop computers, digital cameras, and electric vehicles such as hybrid electric vehicles (HEVs).

Accordingly, according to another embodiment of the present invention, a battery module including the lithium secondary battery as a unit cell, and a battery pack including the same are provided.

The battery module or battery pack may be used as a power source for one or more medium- to large-sized devices among power tools; electric cars including electric vehicles (EVs), hybrid electric vehicles, and plug-in hybrid electric vehicles (PHEVs); or power storage systems.

The external shape of the lithium secondary battery of the present invention is not particularly limited, but may be a cylindrical shape using a can, a square shape, a pouch shape, or a coin shape.

The lithium secondary battery according to the present invention may be used not only as a battery cell used as a power source for a small device, but may also be preferably used as a unit battery in a medium- or large-sized battery module including a plurality of battery cells.

Examples of the medium- or large-sized devices include, but are not limited thereto, electric vehicles, hybrid electric vehicles, plug-in hybrid electric vehicles, and power storage systems.

Hereinafter, the present invention will be explained in more detail with reference to particular examples.

## BEST MODE FOR CARRYING OUT THE INVENTION

### [Examples: Preparation of Positive Electrode Active Material]

### Example 1

After adding 4 L of distilled water to a co-precipitation reactor (capacity 20 L) and maintaining the temperature at 50°C, 100 mL of an ammonia aqueous solution having a concentration of 28 wt% was added. Then, a transition metal solution in which $NiSO_4$, $CoSO_4$ and $MnSO_4$ were mixed in a molar ratio of Ni:Co:Mn of 97.0:0.5:2.5, an ammonia aqueous solution, and a sodium hydroxide solution were added to the co-precipitation reactor, and a co-precipitation reaction was performed to form a precursor. The precursor particles were separated, washed, and dried in an oven at 130°C to prepare a precursor.

Next, the precursor synthesized by the co-precipitation reaction, LiOH, $Al(OH)_3$, $ZrO_2$ and $TiO_2$ were mixed. In this case, LiOH was added in an amount such that the molar ratio of Li: (Ni+Co+Mn) was 1:0.968, and $Al(OH)_3$, $ZrO_2$, and $TiO_2$ were added in amounts such that the weights of Al, Zr, and Ti were 9,000 ppm, 1,200 ppm, and 600 ppm, respectively relative to the total weight of a positive electrode active material.

After that, heat treatment was performed at 720°C in an oxygen atmosphere for 20 hours to prepare a positive electrode active material having a composition of $Li[Ni_{0.9364}Co_{0.0048}Mn_{0.0241}Al_{0.0322}Ti_{0.0012}Zr_{0.0013}]O_2$.

### Example 2

A positive electrode active material having a composition of $Li[Ni_{0.9375}Co_{0.0048}Mn_{0.0242}Al_{0.0322}Zr_{0.0013}]O_2$ was prepared by the same process as in Example 1, except that $TiO_2$ was not added in Example 1.

### Example 3

A positive electrode active material having a composition of $Li[Ni_{0.9376}Co_{0.0048}Mn_{0.0242}Al_{0.0322}Ti_{0.0012}]O_2$ was

prepared by the same process as in Example 1, except that $ZrO_2$ was not added in Example 1.

**Comparative Example 1**

A positive electrode active material was prepared by the same process as in Example 1, except that $Al(OH)_3$, $ZrO_2$ and $TiO_2$ were not added in Example 1.

**Comparative Example 2**

A positive electrode active material was prepared by the same process as in Example 1, except that $Al(OH)_3$ was not added in Example 1.

**Comparative Example 3**

A positive electrode active material was prepared by the same process as in Example 1, except that $Al(OH)_3$ and $TiO_2$ were not added in Example 1.

**Comparative Example 4**

A positive electrode active material was prepared by the same process as in Example 1, except that $Al(OH)_3$ and $ZrO_2$ were not added in Example 1.

**Comparative Example 5**

A positive electrode active material was prepared by the same process as in Example 1, except that $Al(OH)_3$ was added in an amount such that the weight of Al was 3,000 ppm relative to the total weight of the positive electrode active material in Example 1.

**Comparative Example 6**

A positive electrode active material was prepared by the same process as in Example 1, except that $TiO_2$ was added in an amount such that the weight of Ti was 2,000 ppm relative to the total weight of the positive electrode active material in Example 1.

**Comparative Example 7**

A positive electrode active material was prepared by the same process as in Example 1, except that $ZrO_2$ and $TiO_2$ were added in amounts such that the weight of Zr and Ti was 2,000 ppm each relative to the total weight of the positive electrode active material in Example 1.

**Comparative Example 8**

After adding 4 L of distilled water to a co-precipitation reactor (capacity 20 L) and maintaining the temperature at 50°C, 100 mL of an ammonia aqueous solution having a concentration of 28 wt% was added. Then, a transition metal solution in which $NiSO_4$, $CoSO_4$, and $MnSO_4$ were mixed in a molar ratio of Ni:Co:Mn of 8:1:1, an ammonia aqueous solution, and a sodium hydroxide solution were added to the co-precipitation reactor, and a co-precipitation reaction was performed to form a precursor. The precursor particles were separated, washed, and dried in an oven at 130°C to prepare a precursor.

Next, the precursor synthesized by the co-precipitation reaction, LiOH, $Al(OH)_3$, $ZrO_2$, and $TiO_2$ were mixed. In this case, LiOH was added in an amount such that the molar ratio of Li: (Ni+Co+Mn) was 1:0.968, and $Al(OH)_3$, $ZrO_2$, and $TiO_2$ were added in amounts such that the weights of Al, Zr, and Ti were 9,000 ppm, 1,200 ppm, and 600 ppm, respectively, relative to the total weight of a positive electrode active material.

After that, a positive electrode active material was prepared by heat treatment at 720°C in an oxygen atmosphere for 20 hours.

**Comparative Example 9**

A positive electrode active material having a composition of $Li[Ni_{0.9409}Co_{0.0048}Mn_{0.0242}Al_{0.0276}Ti_{0.0012}Zr_{0.0013}]$

$O_2$ was prepared by the same process as in Example 1, except that $Al(OH)_3$ was added in an amount such that the weight of Al was 7,700 ppm relative to the total weight of the positive electrode active material in Example 1.

**[Experimental Examples]**

**Experimental Example 1. Doping Content Confirmation**

For the positive electrode active materials prepared in the Examples and Comparative Examples, the Al content based on the total weight of each positive electrode active material was measured using an inductively coupled plasma optical emission spectrometer (ICP-OES; Optima 7300DV, PerkinElmer Co.), and are listed in Table 1 below.

**Experimental Example 2. XRD Analysis**

The measurement results of $c/2\sqrt{6}a$ using X-ray diffraction analysis (XRD) by Cu K$\alpha$ X-ray according to the above-described method for the positive electrode active materials prepared in Example 1, Example 4 and Comparative Example 5 are shown in FIG. 1.

**Experimental Example 3. Capacity and Lifespan Evaluation**

(3-1) Fabrication of Battery

Each of the positive electrode active materials prepared in the Examples and Comparative Examples, SuperC as a conductive material, and PVDF as a binder were mixed in a weight ratio of 96.5:1.5:2.0 in N-methylpyrrolidone (NMP) to prepare a positive electrode slurry having a solid content of 60 wt%.
The prepared positive electrode slurry was applied to both sides of a 15 $\mu$m thick aluminum current collector at a loading amount of 16 mg/cm$^2$, dried at 130°C, and then rolled between two rolling rolls to form a positive electrode.
A mixture of natural graphite and artificial graphite as negative electrode active materials in a weight ratio of 50:50, SBR and CMC as binders, and SuperC as a conductive material were mixed in a weight ratio of 95.6:1.1:2.3:1.0 in water as a solvent to prepare a negative electrode slurry having a solid content of 60 wt%. The above negative electrode slurry was applied to both sides of a 10 $\mu$m thick copper current collector to match the loading amount of 4.63 mAh/cm$^2$, dried at 130°C, and then rolled between two rolling rolls to form a negative electrode.
An electrode assembly was manufactured by interposing a 15 $\mu$m thick porous polyethylene-based separator between the formed positive and negative electrodes, and then inserted into a pouch-type battery case, and an electrolyte was injected to manufacture a secondary battery. In this case, a solution of 1 M $LiPF_6$ dissolved in an organic solvent mixed with ethylene carbonate (EC): ethyl methyl carbonate (EMC) in a volume ratio of 1:2 was used as the electrolyte.

(3-2) Initial Resistance Measurement

For each of the formed cells above, an activation (formation) process was performed, and then the cells were charged at 0.2 C rate at 25°C to 4.25 V under CC-CV conditions using a PNE-0506 charger/discharger (manufacturer: PNE Solution Co., Ltd.), discharged at 0.2 C rate to adjust the SOC to 50%, and then the voltage drop that appeared when a discharge pulse was applied for 10 seconds at a constant current of 2.5 C was measured to obtain the initial resistance value. If the initial resistance value measured in Comparative Example 1 was set to 100%, the relative initial resistance value of each cell was calculated and shown in Table 1 below.

(3-3) Initial Capacity and Capacity Retention Ratio Measurement

Each cell for which the initial resistance measurement was completed was charged to 4.25 V at 0.2 C rate under CC-CV conditions at 25°C, and CC discharged to 2.5 V at 0.2 C rate to measure an initial discharge capacity.
The charge/discharge was considered as 1 cycle, and the same charge/discharge was repeated 30 times, and then the capacity retention ratio and resistance increase ratio were measured using the equations below. The measurement results are shown in Table 1 below.

- Capacity retention ratio (%) = (Discharge capacity after 30 cycles/Initial discharge capacity) $\times$ 100

- Resistance increase ratio (%) = { (Resistance after 30 cycles - Initial resistance)/Initial resistance} $\times$ 100.

[Table 1]

| | Experimental Example 1 | | | | Experimental Example 3 | | |
|---|---|---|---|---|---|---|---|
| | Al content (ppm) | Zr content (ppm) | Ti content (ppm) | Al+Zr+ Ti total content (ppm) | Initial resistance (%) | Capacity retention ratio (%) | Resistance increase ratio (%) |
| Example 1 | 9,000 | 1,200 | 600 | 10,800 | 88.1 | 96.7 | 40.5 |
| Example 2 | 9,000 | 1,200 | - | 10,200 | 91.6 | 95.8 | 59.1 |
| Example 3 | 9,000 | - | 600 | 9,600 | 92.5 | 95.1 | 67.3 |
| Comparative Example 1 | - | - | - | - | 100 (reference) | 80.3 | 148.9 |
| Comparative Example 2 | - | 200 | 600 | 800 | 97.1 | 88.0 | 94.9 |
| Comparative Example 3 | - | 1,200 | - | 1,200 | 99.1 | 87.9 | 100.1 |
| Comparative Example 4 | - | - | 600 | 600 | 98.6 | 87.7 | 105.8 |
| Comparative Example 5 | 3,000 | 1,200 | 600 | 4,800 | 95.8 | 91.8 | 85.0 |
| Comparative Example 6 | 9,000 | 1,200 | 2,000 | 12,200 | 95.4 | 85.1 | 111.0 |
| Comparative Example 7 | 9,000 | 2,000 | 2,000 | 13,000 | 98.4 | 82.6 | 121.1 |
| Comparative Example 8 | 9,000 | 1,200 | 600 | 10,800 | 99.3 | 83.9 | 135.0 |
| Comparative Example 9 | 7,700 | 1,200 | 600 | 9,500 | 94.1 | 94.9 | 72.5 |

Through Table 1 above, in the case of a positive electrode active material including an NCM oxide having a nickel content of 90 mol% or more, if a combination of Al and Ti; Al and Zr; or Al, Ti and Zr are included as the doping element, but the content is 9,000 to 12,000 ppm, and the Al content is 8,000 ppm or more, it can be confirmed that the resistance and life characteristics are superior to those of other cases. Among them, if Al, Ti, and Zr are all included, as in Example 1, it can be confirmed that the initial resistance and resistance increase ratio are the lowest, while the capacity retention ratio is the best.

On the other hand, even if a combination of Al+Ti+Zr is included as the doping element, if it exceeds 12,000 ppm, as in Comparative Examples 6 and 7, it can be confirmed that the initial resistance and resistance increase ratio increase and the capacity retention ratio decrease.

Meanwhile, in the case of NCM oxide having a Ni content of less than 90 mol% as in Comparative Example 8, it can be confirmed that the resistance characteristics and capacity retention ratio are significantly lower than in Example 1, even though the type and content of the doping element are the same as in Example 1. This is because the positive electrode active material of Comparative Example 8 having a Ni content of 80 mol% has much greater impact on the energy density loss of the entire active material due to capacity reduction due to doping and has insufficient Ni content to compensate for the loss compared to the positive electrode active material of Example 1 having a Ni content of 97 mol%.

**Experimental Example 4. Change Ratio in Length of c-axis and High Voltage Performance Evaluation**

(4-1) Fabrication of Battery

Each of the positive electrode active materials prepared in Example 1 and Comparative Example 9, SuperC as a conductive material, and PVDF as a binder were mixed in a weight ratio of 96.5:1.5:2.0 in N-methylpyrrolidone (NMP) to prepare a positive electrode slurry having a solid content of 70 wt%.

The prepared positive electrode slurry was applied to both sides of a 20 $\mu$m thick aluminum current collector at a loading amount of 16 mg/cm$^2$, dried at 130°C, and then rolled between two rolling rolls to prepare a positive electrode.

A mixture of natural graphite and artificial graphite as negative electrode active materials in a weight ratio of 50:50, SBR and CMC as binders, and SuperC as a conductive material were mixed in a weight ratio of 95.6:1.1:2.3:1.0 in water as a solvent to prepare a negative electrode slurry having a solid content of 60 wt%. The negative electrode slurry was applied to both sides of a 10 $\mu$m thick copper current collector to match the loading amount of 4.63 mAh/cm$^2$, dried at 130°C, and then rolled between two rolling rolls to manufacture a negative electrode.

An electrode assembly was manufactured by interposing a porous polyethylene separator between the positive and negative electrodes, and then positioned inside a battery case, and an electrolyte was injected into the case to form a pouch-type full cell. The electrolyte was prepared by dissolving LiPF$_6$ of 1 M concentration in a mixed organic solvent of ethylene carbonate/dimethyl carbonate/diethyl carbonate in a volume ratio of 3:4:3.

(4-2) Measurement of Change ratio in Length of c-axis

The cell formed in (4-1) was charged and simultaneously performed in-situ operando XRD analysis. The XRD analysis was performed using a Mo target X-ray as a light source and in a transmission mode using a 2-θ scan method. The 1st slit was 1/4°, the Soller slit (both 1st and 2nd) was 0.02 rad, and the 2nd mask was 1.68 mm. The 2-θ 7° to 30° range was measured every 0.014° for about 6 minutes per scan.

The charging was performed by maintaining a CV state until the current density became 0.05 C after CC charging to 4.35 V at 0.1 C. A high-energy XRD Empyrean was used as the measuring device.

Based on the change in c-axis length during charging obtained from the analysis, the change ratio in c-axis length according to Equation 1 was calculated and listed in Table 2 below.

(4-3) Capacity Retention Ratio and Resistance Increase Ratio Measurement

For each cell formed in (4-1) above, the activation (formation) process was performed, and then the PNE-0506 charger/discharger (manufacturer: PNE Solution Co., Ltd.) was used to charge at 0.2 C rate at 25°C to 4.35 V under CC-CV conditions, and CC discharge at 0.2 C rate to 2.5 V, and then the initial discharge capacity and initial resistance were measured.

The charge/discharge was considered as 1 cycle, and the same charge/discharge was repeated 30 times, and then the capacity retention ratio and resistance increase ratio were measured using the equations below. The measurement results are shown in Table 2 below.

- Capacity retention ratio (%) = (Discharge capacity after 30 cycles/Initial discharge capacity) $\times$ 100

- Resistance increase ratio (%) = { (Resistance after 30 cycles - Initial resistance)/Initial resistance} $\times$ 100

[Table 2]

| | Experimental Example 4 | | |
| --- | --- | --- | --- |
| | Change ratio in length of c-axis (%) | Capacity retention ratio (%) | Resistance increase ratio (%) |
| Example 1 | 5.80 | 94.3 | 67.3 |
| Comparative Example 9 | 7.41 | 91.5 | 90.1 |

Examining the results in Table 2 above, it can be confirmed that the performance is not good if operating at high voltages when the Al content is less than 8,000 ppm, even if a combination of the doping elements of Al, Ti, and Zr is included and the total is 9,000 ppm or more.

Specifically, the positive electrode active material of Example 1 with an Al content of 9,000 ppm has a small change ratio in length of the c-axis during charging, so the volume change of the positive electrode material during charging and discharging is small and the durability is excellent, so it can be confirmed that excellent results in the capacity retention ratio and resistance increase ratio are shown even if operated under high voltage conditions.

On the other hand, the positive electrode active material of Comparative Example 9 with an Al content of 7,700 ppm has a high change in length of the c-axis and a large change in volume compared to the positive electrode active material of Example 1, and accordingly, it can be confirmed that the lifespan and resistance characteristics are not good compared to Example 1.

**Claims**

1. A positive electrode active material comprising:

a lithium nickel-cobalt-manganese-based composite oxide having a nickel content of 90 mol% or more among metals excluding lithium; and
a metal element M1 doped in the lithium nickel-cobalt-manganese-based composite oxide,

wherein the metal element M1 comprises two or more selected from the group consisting of Al, Zr and Ti, and certainly comprises Al,

a weight of Al is 8,000 ppm or more based on a total weight of the positive electrode active material, and

a total weight of the metal element M1 is 9,000 ppm to 12,000 ppm based on the total weight of the positive electrode active material.

2. The positive electrode active material according to claim 1, wherein the weight of Al is 8,000 ppm to 10,000 ppm based on the total weight of the positive electrode active material.

3. The positive electrode active material according to claim 1,

wherein the metal element M1 comprises Zr, and

a weight of Zr is 1,000 ppm to 4,000 ppm based on the total weight of the positive electrode active material.

4. The positive electrode active material according to claim 1,

wherein the metal element M1 comprises Ti, and

a weight of Ti is 300 ppm to 4,000 ppm based on the total weight of the positive electrode active material.

5. The positive electrode active material according to claim 1, wherein the metal element M1 comprises all of Al, Zr and Ti.

6. The positive electrode active material according to claim 1, wherein the lithium nickel-cobalt-manganese-based composite oxide has the nickel content of 95 mol% to 99 mol% among metals excluding lithium.

7. The positive electrode active material according to claim 1, wherein the lithium nickel-cobalt-manganese-based composite oxide has a cobalt content of 0.1 mol% to 1.0 mol% among metals excluding lithium.

8. The positive electrode active material according to claim 1, wherein the lithium nickel-cobalt-manganese-based composite oxide has a composition of the following Formula 1:

$$[\text{Formula 1}] \qquad \text{Li}_{1+x}(\text{Ni}_a\text{Co}_b\text{Mn}_c\text{M1}_d\text{M2}_e)\text{O}_2$$

in Formula 1,

M1 is two or more selected from the group consisting of Al, Zr and Ti, and certainly comprises Al,

M2 is one or more selected from the group consisting of W, Cu, Fe, V, Cr, Zn, Al, In, Ta, Y, La, Sr, Ga, Sc, Gd, Sm, Ca, Ce, Nb, Mg, B and Mo,

$1+x$, a, b, c, d and e are atomic fractions of independent elements, respectively, and

$-0.2 \leq x \leq 0.2$, $0.90 \leq a < 1$, $0 < b < 0.01$, $0 < c < 0.10$, $0 < d \leq 0.05$, $0 \leq e \leq 0.05$, and $a+b+c+d+e=1$ are satisfied.

9. The positive electrode active material according to claim 1, wherein an average crystallite size of the positive electrode active material is 80 nm to 160 nm.

10. The positive electrode active material according to claim 1, wherein a value of $c/2\sqrt{6}a$, where a and c represent an a-axis direction and a c-axis direction lengths of the crystallite of the positive electrode active material, respectively, is 1.0075 or more.

11. The positive electrode active material according to claim 1, wherein a change ratio of a c-axis length of the positive electrode active material according to the following Equation 1 is 7.0% or less:

$$\text{Change ratio of c-axis length (\%)} = \{(C_{max}-C_{min})/C_{min}\} \times 100 \qquad [\text{Equation 1}]$$

in Equation 1,

$C_{max}$ is the maximum value of the c-axis length,

$C_{min}$ is the minimum value of the c-axis length, and

the c-axis length is obtained by performing in-situ Operando XRD analysis while charging a battery including a positive electrode comprising the positive electrode active material.

12. A method for preparing the positive electrode active material according to claim 1, the method comprising: a step of mixing a nickel-cobalt-manganese composite precursor having a nickel content of 90 mol% or more among metals excluding lithium, a lithium raw material and a doping raw material containing a metal element M1, and calcining at 650°C to 850°C.

13. A positive electrode comprising:

a positive electrode current collector; and
a positive electrode active material layer provided on at least one surface of the positive electrode current collector,
wherein the positive electrode active material layer comprises the positive electrode active material according to claim 1.

14. A lithium secondary battery comprising:

the positive electrode according to claim 13;
a negative electrode comprising a negative electrode active material;
a separator disposed between the positive electrode and the negative electrode; and
an electrolyte.

FIG. 1

## INTERNATIONAL SEARCH REPORT

| | International application No. |
|---|---|
| | **PCT/KR2024/012441** |

| A. | CLASSIFICATION OF SUBJECT MATTER |
|---|---|

**H01M 4/525**(2010.01)i; **H01M 4/505**(2010.01)i; **H01M 4/131**(2010.01)i; **H01M 10/0525**(2010.01)i; **C01G 53/00**(2006.01)i; **H01M 4/36**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 4/131(2010.01); H01M 4/1391(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 양극 활물질(cathode active material), 리튬 니켈코발트망간계 복합 산화물(lithium nickel cobalt manganese-based composite oxide), 알루미늄 (aluminium, Al), 지르코늄(zirconium, Zr), 티타늄(titanium, Ti), 중량(weight)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2020-0065856 A (LG CHEM, LTD.) 09 June 2020 (2020-06-09)<br>See claims 1, 8 and 9; paragraphs [0080], [0086]-[0090] and [0117]; and example 4. | 1-14 |
| A | YANG, J. et al. Effect of dual improved electronic and cationic conductivity via W doping on cyclability and rate performance of LiNi0.90Co0.04Mn0.03Al0.03O2 cathode for rechargeable LiBs. Journal of Energy Storage. 2023 (electronic publication: 15 March 2023), vol. 63, article no.: 107088, pp. 1-10.<br>See pages 1 and 2. | 1-14 |
| A | KR 10-2023-0095286 A (POSCO HOLDINGS INC. et al.) 29 June 2023 (2023-06-29)<br>See examples 1-22; paragraphs [0068] and [0069]; and tables 1-3. | 1-14 |
| A | KR 10-2020-0120521 A (SK INNOVATION CO., LTD.) 21 October 2020 (2020-10-21)<br>See claims 1-18; and tables 1 and 2. | 1-14 |
| A | US 2022-0093920 A1 (POSCO et al.) 24 March 2022 (2022-03-24)<br>See claims 1-12; and examples 6-8. | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 November 2024** | **27 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012441**

| Patent document cited in search report | | | Publication date (day/month/year) | Patent family member(s) | | | Publication date (day/month/year) |
|---|---|---|---|---|---|---|---|
| KR | 10-2020-0065856 | A | 09 June 2020 | CN | 113692659 | A | 23 November 2021 |
| | | | | EP | 3872902 | A1 | 01 September 2021 |
| | | | | JP | 2022-513681 | A | 09 February 2022 |
| | | | | JP | 7191420 | B2 | 19 December 2022 |
| | | | | KR | 10-2724456 | B1 | 01 November 2024 |
| | | | | US | 2022-0045322 | A1 | 10 February 2022 |
| | | | | WO | 2020-111545 | A1 | 04 June 2020 |
| KR | 10-2023-0095286 | A | 29 June 2023 | CN | 118435378 | A | 02 August 2024 |
| | | | | EP | 4456189 | A1 | 30 October 2024 |
| | | | | WO | 2023-121155 | A1 | 29 June 2023 |
| KR | 10-2020-0120521 | A | 21 October 2020 | CN | 111816923 | A | 23 October 2020 |
| | | | | CN | 111816923 | B | 06 August 2024 |
| | | | | CN | 118572201 | A | 30 August 2024 |
| | | | | US | 11581533 | B2 | 14 February 2023 |
| | | | | US | 11848442 | B2 | 19 December 2023 |
| | | | | US | 2020-0328414 | A1 | 15 October 2020 |
| | | | | US | 2023-0107279 | A1 | 06 April 2023 |
| US | 2022-0093920 | A1 | 24 March 2022 | EP | 3890071 | A1 | 06 October 2021 |
| | | | | JP | 2022-510189 | A | 26 January 2022 |
| | | | | JP | 7157249 | B2 | 19 October 2022 |
| | | | | US | 12136732 | B2 | 05 November 2024 |
| | | | | WO | 2020-111893 | A1 | 04 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230117305

- KR 1020240006915